Europäisches Patentamt

European Patent Office

Office européen des brevets

(11) EP 1 078 969 A1

(19)

(12) **EUROPEAN PATENT APPLICATION**

(43) Date of publication:
**28.02.2001 Bulletin 2001/09**

(51) Int Cl.⁷: **C09K 11/02**, H01J 17/49,
C09K 11/56

(21) Application number: **00402308.1**

(22) Date of filing: **18.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.08.1999 JP 23520099**

(71) Applicant: **SONY CORPORATION**
**Tokyo (JP)**

(72) Inventors:
• **Igarashi, Takahiro**
**Shinagawa-ku, Tokyo (JP)**
• **Kusunoki, Tsuneo**
**Shinagawa-ku, Tokyo (JP)**
• **Ohno, Katsutoshi**
**Shinagawa-ku, Tokyo (JP)**

(74) Representative: **Thévenet, Jean-Bruno et al**
**Cabinet Beau de Loménie**
**158, rue de l'Université**
**75340 Paris Cédex 07 (FR)**

(54) **Fluorescence material composition, process for producing the same, and display**

(57)     A fluorescence material composition consisting of sulfide fluorescence material particles and electrically conductive particles adhering to a surface of each of the sulfide fluorescence material particles.

EP 1 078 969 A1

# EP 1 078 969 A1

**Description**

## BACKGROUND OF THE INVENTION AND RELATED ART STATEMENT

The present invention relates to a fluorescence material composition, a process for producing the same and a display to which the fluorescence material composition is applied.

A fluorescence material which is excited by energy of ultraviolet light, electron rays or an electric field to emit luminescence is widely used as a material for constituting a fluorescence surface of a display. A fluorescence material having optimum light emission efficiency and deterioration characteristics is selected and used depending upon kinds of displays, more specifically, magnitude and kinds of exciting energy.

Among displays attracting attention in recent years is a cold cathode field emission display (to be referred to as "field emission display" hereinafter). This field emission display is a flat type display which displays images on the basis of cold cathode field emission (field emission) phenomenon, and it is also called a field emission display (FED). The cold cathode field emission phenomenon refers to a phenomenon that when an electric field having intensity equal to, or higher than, a certain threshold value is applied to a metal, a semiconductor or the like placed in vacuum, electrons pass through thin energy barriers in the vicinity of the surface of the metal, the semiconductor or the like owing to a tunnel effect and the electrons are emitted into the vacuum even at room temperature. In a practical constitution of the field emission display, a cathode panel and an anode panel are disposed to be opposed to each other through a vacuum space. The cathode panel has cold cathode field electron emission devices (to be referred to as "field emission device" hereinafter) capable of emitting the above electrons. The anode panel has a fluorescence layer which is composed of a fluorescence material and is patterned in a predetermined form, and an anode electrode for attracting the electrons. In the above constitution, electrons emitted to the vacuum space from the filed emission device on the cathode panel are attracted to the anode electrode on the anode panel to enter the fluorescence layer and excite the fluorescence layer to emit light. The field emission display can therefore accomplish high brightness with low power consumption as compared with conventional cathode ray tubes (CRT) using the emission of electrons from a hot cathode.

Fluorescence materials that are widely used are largely classified into oxide fluorescence material particles and sulfide fluorescence material particles. The oxide fluorescence material particles are typically composed of zinc oxide (ZnO). The sulfide fluorescence material particles are typically composed of a solid solution formed of a combination of either zinc sulfide (ZnS) or zinc sulfide-cadmium ($Zn_xCd_{1-x}S$) and at least one of activators such as copper (Cu), silver (Ag), aluminum (Al), chlorine (Cl) and gold (Au), or composed of yttrium oxide sulfide activated with europium (Eu). The oxide fluorescence material particles emit green light, generally show a low electric resistivity and is relatively free from deterioration caused, with elapse of time, by incidence of electrons. However, they generally show low light emission efficiency. The sulfide fluorescence material particles emit light in various colors ranging from blue color to orange color in wave length region by selecting a proper activator, so that they are therefore indispensable for full color display, and they are relatively excellent in light emission efficiency. However, they generally show a high electric resistivity and suffer large deterioration caused, with elapse of time, by incidence of electrons as compared with the oxide fluorescence material particles.

Meanwhile, in a field emission display, there is caused a problem which does not occur in a cathode ray tube, because an acceleration voltage of electrons entering the fluorescence layer is lower than that in a cathode ray tube. In the cathode ray tube in which high voltage acceleration takes place, the entering depth of electrons into the fluorescence layer is large, so that the energy of electrons is received in a relatively large area inside the fluorescence layer. Therefore, a plurality of the fluorescence particles existing in such a relatively large area can be excited at once. It is therefore comparatively easier to accomplish high brightness in the cathode ray tube. In contrast, in a field emission display in which an acceleration voltage of electrons is low, the entering depth of electrons into the fluorescence layer is small, so that the energy of electrons is received only in a narrow region. Therefore, for accomplishing practically sufficient brightness, it is required to increase the density of electrons emitted from the field emission device (i.e., to increase the current density).

When the sulfide fluorescence material particles are applied to a field emission display for realizing full color display, the sulfide fluorescence material particles used at a low acceleration voltage and at a high current density are easily charged due to the electric conductivity thereof and show an increase in temperature. As a result, sulfur as an element constituting the sulfide fluorescence material particles is dissociated as a simple substance or in the form of sulfur monoxide (SO) or sulfur dioxide ($SO_2$), which results in a change in composition of the sulfide fluorescence material particles or physical destruction thereof. The above deterioration phenomenon of the sulfide fluorescence material particles leads to a change in display color, a fluctuation in light emission efficiency, contamination of constituting members inside the display and finally a decrease in the reliability and lifetime of the field emission display.

Further, in a so-called low-acceleration-voltage type field emission display, no metal-back layer can be used, which is disadvantageous with regard to the deterioration of the sulfide fluorescence material particles. The metal-back layer refers to a metal layer formed so as to cover the fluorescence layer for stabilizing the potential of a fluorescence surface, preventing the formation of ion spots and improving the brightness of the fluorescence surface in a cathode ray tube or a so-called high-acceleration-voltage type field emission display. Typically, the metal-back layer consists of a vapor deposition layer of aluminum. In the low-acceleration-voltage type field emission display in which the acceleration voltage of electrons is low, electrons do not have energy sufficient for passing through the metal-back layer, so that the metal-back layer cannot be provided. It is therefore impossible to utilize antistatic mechanism with the metal-back layer.

For the prevention of a charge in the low-acceleration-voltage type field emission display, therefore, it is inevitable to resort to decreasing a resistance by the material design of the fluorescence layer, specifically, the fluorescence material. As a method of achieving the above decreasing of a resistance, it has been conventionally proposed to use so-called mixture type fluorescence material composition prepared by mixing sulfide fluorescence material particles with electrically conductive particles composed, for example, of indium oxide ($In_2O_3$) or the like. From the technical point of view, however, it is very difficult to homogeneously mix and disperse the sulfide fluorescence material particles and the electrically conductive particles due to a difference between these two materials in specific gravity, particle diameters and particle form. Even with the above mixture type fluorescence material composition, therefore, it has been difficult to attain a sufficient effect on the prevention of charge, and it is hardly possible to effectively prevent non-uniformity in color, non-uniformity in brightness and a short lifetime.

## OBJECT AND SUMMARY OF THE INVENTION

It is therefore an object of the present invention to provide a fluorescence material composition of which the deterioration is effectively suppressed even under a high current density.

It is another object of the present invention to provide a process for easily producing the above fluorescence material composition.

It is still another object of the present invention to provide a display to which the above fluorescence material composition is applied and which is excellent in reliability and a lifetime.

According to the present invention, the above object of the present invention is achieved by a fluorescence material composition consisting of sulfide fluorescence material particles and electrically conductive particles adhering to a surface of each of the sulfide fluorescence material particles. That is, in the fluorescence material composition of the present invention, the sulfide fluorescence material particles and the electrically conductive particles can be handled as particles each of which is an integrally formed substance, and they have excellent conductivity. Therefore, the fluorescence material composition of the present invention exhibits a sufficient antistatic effect under a high current density, so that the deterioration is suppressed.

According to the present invention, there is provided a process for producing the above fluorescence material composition of the present invention. That is, the process for producing a fluorescence material composition comprises the steps of:

(A) allowing a precursor of an electrically conductive material to adhere to a surface of each of sulfide fluorescence material particles in a dispersing medium in which the sulfide fluorescence material particles are dispersed, and
(B) converting the precursor of the electrically conductive material to electrically conductive particles to obtain a fluorescence material composition consisting of the sulfide fluorescence material particles and the electrically conductive particles adhering to a surface of each of the sulfide fluorescence material particles.

In the above steps, the electrically conductive particles can be easily allowed to adhere to the surface of each of the sulfide fluorescence material particles.

According to the present invention, there is also provided a display to which the above fluorescence material composition of the present invention is applied. That is, the display for performing displaying with light emission of a fluorescence layer caused by excitation, comprises:

the fluorescence layer formed on a substrate, and
an exciting source for exciting the fluorescence layer,
wherein the fluorescence layer comprises a fluorescence material composition consisting of sulfide fluorescence material particles and electrically conductive particles adhering to a surface of each of the sulfide fluorescence material particles.

In the display of the present invention, since the fluorescence layer comprises the fluorescence material composition which is excellent in conductivity and is almost free of deterioration, a decrease in brightness is effectively suppressed even under a high current density and a long lifetime can be accomplished.

In the fluorescence material composition and the display of the present invention, preferably, the electrically conductive particles have a diameter smaller than a diameter of the sulfide fluorescence material particles. When the particle diameter of the electrically conductive particles is equal to, or greater than, the diameter of the sulfide fluorescence material particles, it is difficult to maintain a state where the electrically conductive particles "adhere" to the surface of each of the sulfide fluorescence material particles, and the composition may be substantially a mere mixture of the electrically conductive particles with the sulfide fluorescence material particles. The mere mixture is not sufficient for easily homogeneously dispersing the sulfide fluorescence material particles and the electrically conductive particles, as is already described. In the present invention, it is difficult to uniquely determine a preferred ratio between an average diameter of the sulfide fluorescence material particles and an average diameter of the electrically conductive particles. In general, however, when the sulfide fluorescence material particles generally used have an average diameter approximately on the order of $10^{-6}$ to $10^{-5}$ m, the electrically conductive particles preferably have an average diameter approximately on the order of $10^{-8}$ to $10^{-7}$ m. As the above ratio increases, the adhesion of the electrically conductive particles to the sulfide fluorescence material particles tends to increase and the coverage by the electrically conductive particles tends to improve.

When the electrically conductive particles very densely adhere to the surface of each of the sulfide fluorescence material particles, the sulfide fluorescence material particles show a state where each of them is coated with the layer having electrical conductivity. However, the electrically conductive particles do not necessarily need to densely adhere to the surface of each of the sulfide fluorescence material particles. That is, when the fluorescence layer is formed of the sulfide fluorescence material particles, and so long as the electrically conductive particles are present between neighboring sulfide fluorescence material particles in such an amount that a charge can be effectively prevented, the adhesion state of the electrically conductive particles on the surface of each sulfide fluorescence material particle can be a sparse state or may be a combination of sparse and dense states.

The electrically conductive particles may be composed of any substance so long as the substance has high conductivity than the sulfide fluorescence material particles, can transmit energy supplied from the exciting source, has sufficient adhesion to the sulfide fluorescence material particles and does not prevent the light emission characteristic of the sulfide fluorescence material particles. Specific examples of a material for the electrically conductive particles include zinc oxide, indium oxide, tin oxide and indium tin oxide (ITO). Of these, zinc oxide is a fluorescence material itself and is preferably used as a material for the electrically conductive particles in the present invention. That is, a fluorescence material composition consisting of the sulfide fluorescence material particles and electrically conductive particles of zinc oxide adhering to the surface of each of the sulfide fluorescence material particles is a fluorescence material composition having abundant light colors and high light emission efficiency which are advantages of the sulfide fluorescence material particles and also having a high electrical conductivity which is an advantage of zinc oxide.

In the process for producing a fluorescence material composition, provided by the present invention, so long as the electrically conductive particles finally adhere the surface of each of the sulfide fluorescence material particles, the precursor of an electrically conductive material may be an electrically conductive material having desired composition from the beginning. Alternatively, the precursor of an electrically conductive material may be an electrically conductive material synthesized at a step in the course of production, and is converted to the electrically conductive particles through a chemical reaction. When the fluorescence material composition is produced through a precursor, the precursor of the electrically conductive material obtained by a liquid phase reaction in the dispersing medium can be allowed to adhere to the surface of each of the sulfide fluorescence material particles in the step (A). In the above liquid phase reaction, the precursor can be allowed to adhere to the surface of each of the sulfide fluorescence material particles thin.

For example, in the step (A), water is used as a dispersing medium, and the precursor which is a zinc salt containing oxygen atom is allowed to adhere to the surface of each of the sulfide fluorescence material particles, and in the step (B), the zinc salt containing oxygen atom is sintered (heated or calcined) to convert it to the electric conductive particles composed of zinc oxide. Examples of the zinc salt containing oxygen atom include zinc carbonate ($ZnCO_3$), zinc hydroxide [$Zn(OH)_2$] and zinc hydroxycarbonate [$2ZnCO_3 \cdot 3Zn(OH)_2$]. For obtaining electrically conductive particles having an average particle diameter of approximately $10^{-8}$ to $10^{-7}$ m, it is preferred to select a zinc salt which can be sintered at a lower temperature. In the sintering (calcining) at a low temperature, particle growth is inhibited during the sintering, it is easier to form the electrically conductive particles having an average particle diameter of approximately $10^{-8}$ to $10^{-7}$ m, and damage of the sulfide fluorescence material particles can be prevented. Zinc hydroxycarbonate is decomposed around approximately 240°C to release carbon dioxide and water, and is converted to zinc oxide (ZnO), so that it is preferred for use as a zinc salt in the process for producing a fluorescence material composition, provided by the present invention. Since the decomposition of zinc hydroxycarbonate requires no external supply of oxygen, the sintering (calcining) can be carried out in a deoxidized atmosphere. The above chemical formula of zinc hydroxycarbonate shows zinc hydroxycarbonate in the most stable state, and the molar ratio of $ZnCO_3$ and $Zn(OH)_2$ vanes depending upon reaction conditions or pH in particular.

In the fluorescence material composition, the process for producing a fluorescence material composition and the display of the present invention, examples of the sulfide fluorescence material particles include (ZnS:Cl), (ZnS:Ag, Cl), (ZnS:Cu), (ZnS:Ag,Al,Cu), (ZnS:Cu,Al), (ZnS:Cu,Au,Al), $[(Zn_{0.50}Cd_{0.50})S:Ag,Cl]$, $[(Zn_{0.40}Cd_{0.60})S:Ag,Cl]$, $[(Zn_{0.30}Cd_{0.70})S:Ag,Cl]$, $[(Zn_{0.22}Cd_{0.78})S:Ag,Cl]$ and $(Y_2O_2S:Eu)$.

In addition to the sulfide fluorescence material particles and the electrically conductive particles, the fluorescence material composition of the present invention may contain additives for improving brightness, formability and mechanical strength in the constitution of a fluorescence layer, as required.

In the display of the present invention, the fluorescence layer may be excited by irradiation with various electromagnetic waves, electron beams or ion beams. For example, a typical display in which the fluorescence layer emits light under irradiation with electron beams is a cold cathode field emission display, and a typical display in which the fluorescence layer emits light under irradiation with ultraviolet rays generated by plasma discharge is a plasma display or a fluorescence display tube.

When the fluorescence layer emits light under irradiation with electron beams, and when the display is a cold cathode field emission display, the exciting source is cold cathode field electron emission devices (to be abbreviated as "field emission device" hereinafter). The type of the field emission device is not critical, and it can be selected from known field emission devices of various types such as a so-called Spindt type, a flat type and an edge type.

## BRIEF DESCRIPTION OF THE DRAWINGS

The present invention will be explained with reference to drawings hereinafter.

Fig. 1 is a Fourier transform infrared spectroscopic spectrum obtained for confirming the formation of zinc hydroxycarbonate as a precursor in the process for producing a fluorescence material composition of the present invention.

Fig. 2 is an X ray diffraction pattern obtained for confirming the conversion of the zinc hydroxycarbonate to zinc oxide by sintering.

Fig. 3 is a characteristic graph showing a comparison between changes in brightness, with elapse of time, of the fluorescence material composition of the present invention to which the electrically conductive particles adhere and of conventional fluorescence material particles to which no electrically conductive particles adhere.

Fig. 4 is a schematic view of a constitution example of a field emission display to which the present invention is applied.

Figs. 5A and 5B are schematic partial end views of a support, etc., for explaining the method of producing a Spindt type field emission device.

Figs. 6A and 6B, following Fig. 5B, are schematic partial end views of the support, etc., for explaining the method of producing the Spindt type field emission device.

Figs. 7A and 7B are schematic partial end views of edge type field emission devices.

Fig. 8 is a schematic perspective view prepared by partly cutting and exposing a support, etc., in the vicinity of an opening portion in the edge type field emission device shown in Fig. 7B.

Figs. 9A, 9B and 9C are schematic partial end views of a support, etc., for explaining the method of producing the edge type field emission device shown in Fig. 7B.

Figs. 10A and 10B, following Fig. 9C, are schematic partial end views of the support, etc., for explaining the method of producing the edge type field emission device.

Figs. 11A and 11B, following Fig. 10B, are schematic partial end views of the support, etc., for explaining the method of producing the edge type field emission device.

Fig. 12 is a schematic partial end view of a flat type field emission device.

Figs. 13A, 13B and 13C are schematic partial end views of a support, etc., for explaining the method of producing the flat type field emission device shown in Fig. 12.

## DESCRIPTION OF THE PREFERRED EMBODIMENTS

As an exciting source in a field emission display which is a concrete example of the display of the present invention, a Spindt type field emission device, an edge type field emission device and a flat type field emission device will be outlined as a typical example of the field emission device, and basic steps of producing these field emission devices will be explained.

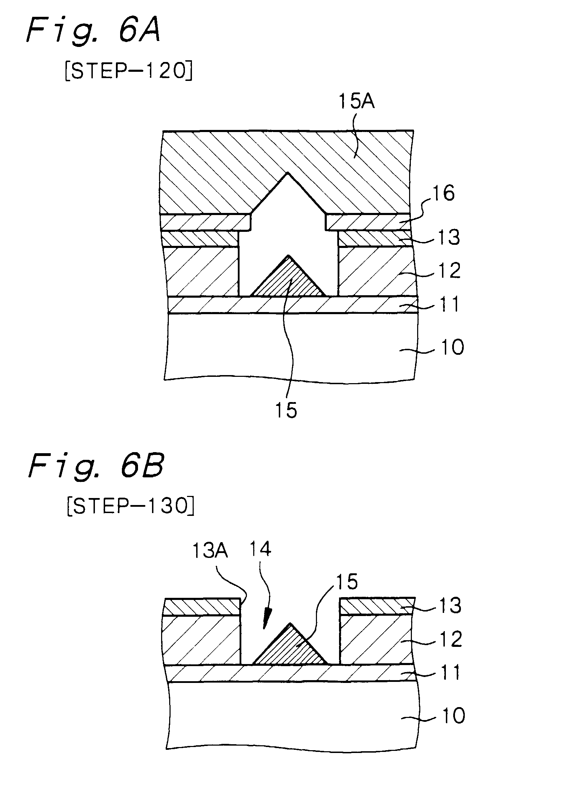

Fig. 6B shows a structure of the Spindt type field emission device. That is, the Spindt type field emission device comprises:

(a) a cathode electrode 11 formed on a support 10,
(b) an insulating layer 12 formed on the cathode electrode 11 and the support 10,
(c) a gate electrode 13 formed on the insulating layer 12.

(d) an opening portion 14 which penetrates through the gate electrode 13 and the insulating layer 12, and
(e) a conical electron-emitting electrode 15 formed on the cathode electrode 11 positioned in a bottom portion of the opening portion 14, and

electrons are emitted from a tip portion of the electron-emitting electrode 15.

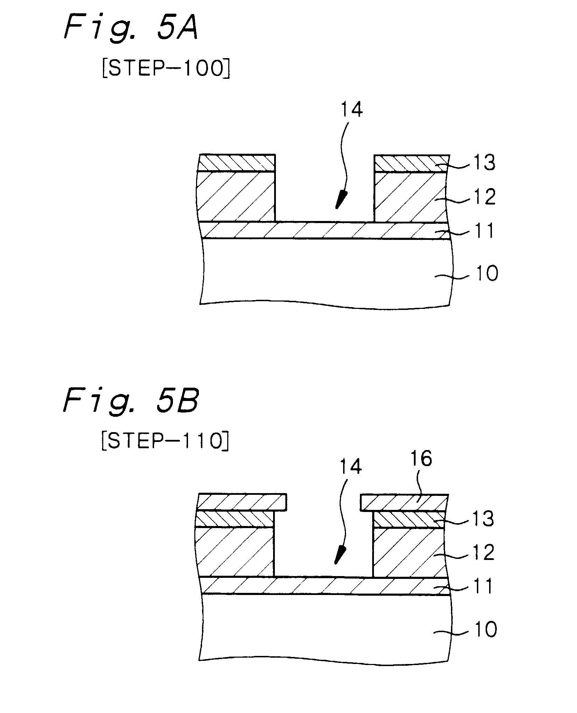

The method of producing the Spindt type field emission device shown in Fig. 6B will be explained with reference to Figs. 5A, 5B, 6A and 6B hereinafter. In explanations to be described below, a combination of the support and every structure formed thereon at any stage when a certain process is finished will be sometimes generally referred to as "substratum".

[Step-100]

First, a patterned cathode electrode 11 composed of niobium (Nb) is formed on a support 10 made, for example, of a glass substrate, and then an insulating layer 12 composed of $SiO_2$ and a gate electrode 13 composed of an electrically conductive material are consecutively formed thereon. Then, the gate electrode 13 and the insulating layer 12 are patterned, to form an opening portion 14 (see Fig. 5A).

[Step-110]

Then, aluminum is vapor-deposited obliquely relative to the substratum, to form a peel-off layer 16 shown in Fig. 5B. In this case, the incidence angle of vaporized particles to the normal of the support 10 is set at a sufficiently large angle, whereby the peel-off layer 16 can be formed on the insulating layer 12 and the gate electrode 13 almost without depositing aluminum in the bottom portion of the opening portion 14. The peel-off layer extends in the form of eaves from an opening end portion of the opening portion 14, and the diameter of the opening portion 14 is therefore substantially decreased.

[Step-120]

Then, for example, molybdenum (Mo) is perpendicularly vapor-deposited on the entire surface of the substratum. In this case, as a metal layer 15A having an overhanging form grows on the peel-off layer 16, the substantial diameter of the opening portion 14 is decreased, so that the vaporized particles which can contribute to the deposition in the bottom portion of the opening portion 14 come to be limited to vaporized particles passing in and near the central portion of the opening portion 14. As a result, as shown in Fig. 6A, a circular-conical deposit is formed on the bottom portion of the opening portion 14, and the circular-conical deposit constitutes an electron-emitting electrode 15.

[Step-130]

Thereafter, the peel-off layer 16 is peeled off the surfaces of the insulating layer 12 and the gate electrode 13 by an electrochemical process and a wet process, and the metal layer 15A above the gate electrode 13 and the insulating layer 12 is selectively removed as shown in Fig. 6B.

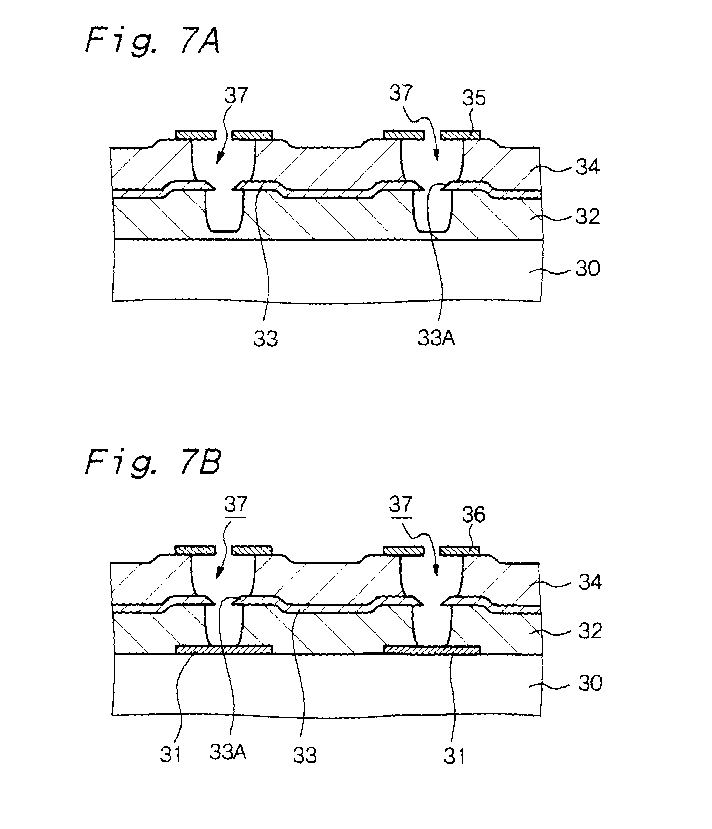

Fig. 7A shows a schematic partial end view of the edge type field emission device. This edge type field emission device comprises:

(a) a first insulating layer 32 formed on a support 30,
(b) an electron-emitting layer 33 formed on the first insulating layer 32.
(c) a second insulating layer 34 formed on the electron-emitting layer 33 and the first insulating layer 32.
(d) a gate electrode 35 formed on the second insulating layer 34, and
(e) an opening portion 37 which penetrates through at least the gate electrode 35, the second insulating layer 34 and the electron-emitting layer 33, and

electrons are emitted from an edge portion 33A of the electron-emitting layer 33 projected from a side wall of the opening portion 37.

The edge type field emission device having the above structure will be referred to as a first-structured edge type field emission device for convenience.

Fig. 7B shows a schematic partial end view of a variant of the edge type field emission device. This edge type field emission device comprises:

(a) a first gate electrode 31 formed on a support 30,

(b) a first insulating layer 32 formed on the first gate electrode 31 and the support 30,

(c) an electron-emitting layer 33 formed on the first insulating layer 32,

(d) a second insulating layer 34 formed on the electron-emitting layer 33 and the first insulating layer 32,

(e) a second gate electrode 36 formed on the second insulating layer 34, and

(f) an opening portion 37 which penetrates through the second gate electrode 36, the second insulating layer 34, the electron-emitting layer 33 and the first insulating layer 32, and which has a bottom portion where a surface of the first gate electrode 31 is exposed, and

electrons are emitted from an edge portion 33A of the electron-emitting layer 33 projected from a side wall of the opening portion 37.

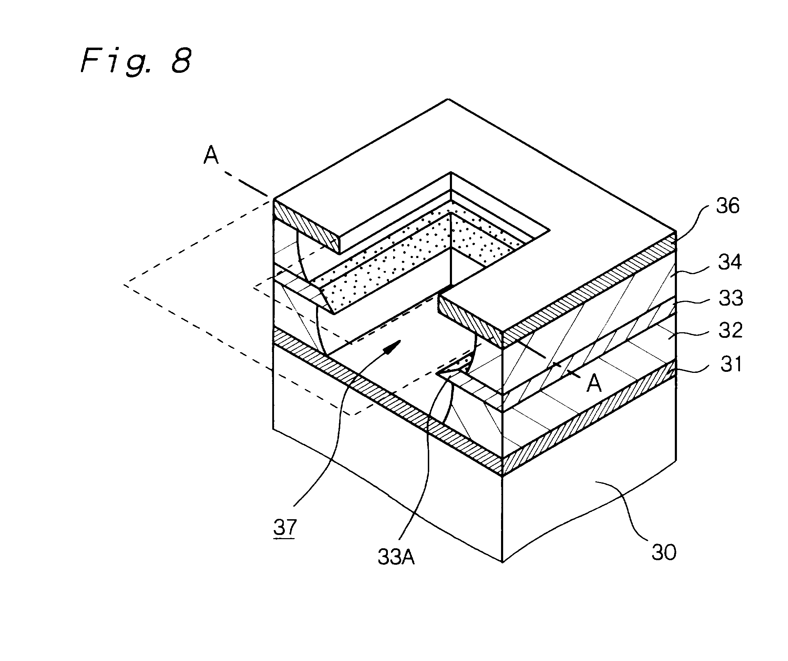

Fig. 8 shows a schematic perspective view prepared by partly cutting the support 30, etc., in the vicinity of the opening portion 37. The schematic partial end view shown in Fig. 7B is an end view taken along A-A line in Fig. 8. The edge type field emission device having the above constitution will be referred to as a second-structured edge type field emission device for convenience. Since the second-structured edge type field emission device has the first gate electrode 31 provided below the electron-emitting layer 33, an electric field having high intensity can be formed in the vicinity of the edge portion 33A of the electron-emitting layer 33 projected from the side wall of the opening portion 37, as compared with the first-structured edge type field emission device.

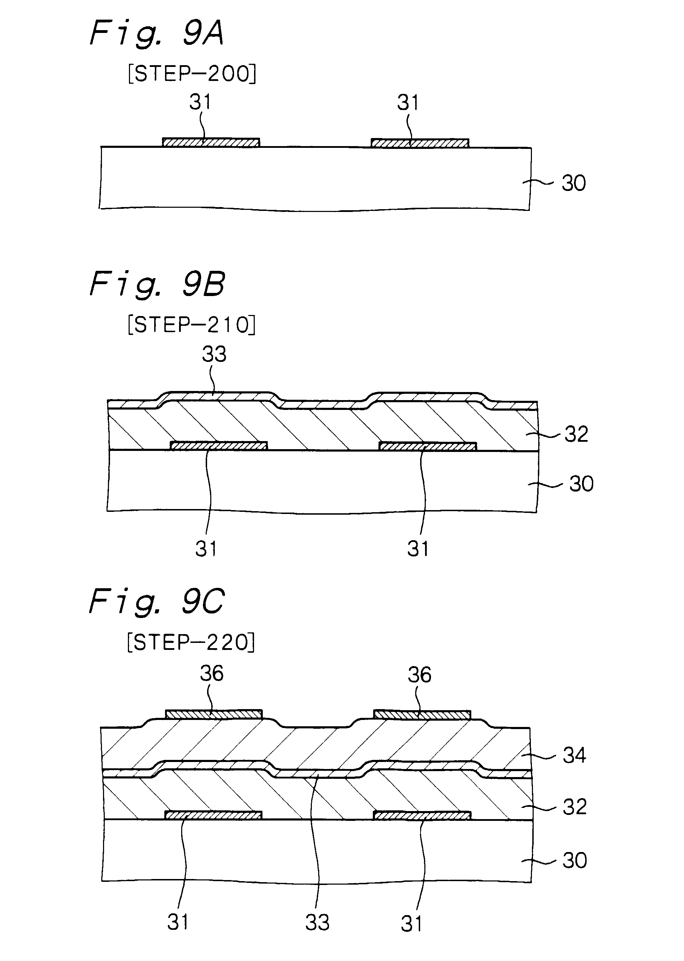

The method of producing the edge type field emission device shown in Fig. 7B will be explained with reference to Figs. 9A, 9B, 9C, 10A, 10B, 11A and 11B.

[Step-200]

First, an approximately 0.2 μm thick electrically conductive material layer composed of tungsten for the first gate electrode is formed on a support 30 made, for example, of glass by a sputtering method. Then, the electrically conductive material for the first gate electrode is patterned by a lithography method and a dry etching method according to usual procedures, to form the first gate electrode 31 (see Fig. 9A).

[Step-210]

Then, the first insulating layer 32 is formed on the entire surface. In this embodiment, for example, a 0.3 μm thick $SiO_2$ layer is formed. Further, a 0.2 μm thick electrically conductive material layer composed of tungsten for the electron-emitting layer is formed on the first insulating layer 32, and then patterned in a predetermined form, to form the electron-emitting layer 33 (see Fig. 9B).

[Step-220]

Then, the second insulating layer 34 composed, for example, of $SiO_2$ and having a thickness, for example, of approximately 0.7 μm is formed on the entire surface. Further, an approximately 0.2 μm electrically conductive material layer composed of tungsten for the second gate electrode is formed on the second insulating layer 34, and patterned as predetermined, whereby the second gate electrode 36 can be formed (see Fig. 9C). The material and the thickness of the second gate electrode 36 may be the same as, or different from, those of the first gate electrode 31.

[Step-230]

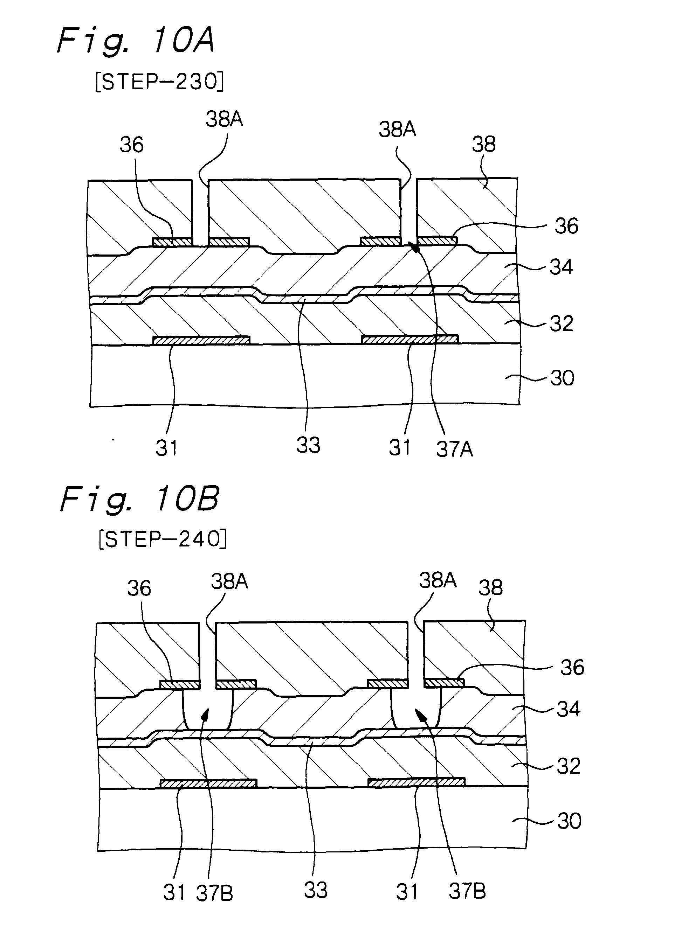

Then, a resist layer 38 is formed on the entire surface. Further, a resist opening portion 38A is formed in the resist layer 38 such that part of the surface of the second gate electrode 36 is exposed. The resist opening portion 38A has a rectangular form when viewed as a plan view, and the longer sides of the rectangular form have a length of approximately 100 μm each, and the shorter sides thereof have a length of several μm to 10 μm each. Then, the second gate electrode 36 exposed in a bottom of the resist opening portion 38A is anisotropically etched, for example, by a reactive ion-etching (RIE) method, to form an opening portion 37A (see Fig. 10A). In this embodiment, since the second gate electrode 36 is composed of tungsten, the opening portion 37A having a perpendicular side wall can be formed by etching with $SF_6$ gas.

[Step-240]

Then, the second insulating layer 34 exposed in a bottom of the opening portion 37A is isotropically etched, to form an opening portion 37B as shown in Fig. 10B. In this embodiment, since the second insulating layer 34 is composed of $SiO_2$, wet etching is carried out with a buffered hydrofluoric acid aqueous solution. The opening portion 37B comes to have a side wall positioned backward from the opening end portion of the opening portion 37A. The amount of the backward distance can be controlled by adjusting the length of the etching time period. In this embodiment, the wet etching is carried out until the lower end of the opening portion 37B comes to be positioned backward from the opening end portion of the opening portion 37A.

[Step-250]

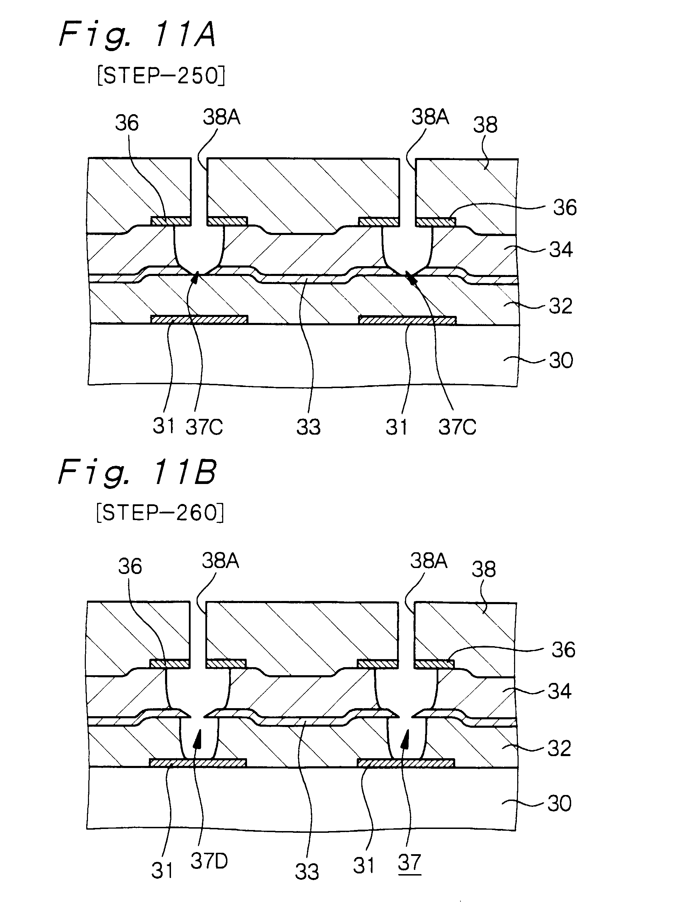

Then, the electron-emitting layer 33 exposed in a bottom of the opening portion 37B is dry-etched under a condition using ions as main etching species. In the dry-etching with ions as main etching species, ions as charged particles can be accelerated by utilizing application of a bias voltage to a material to be etched and interaction between plasma and an electric field. In general, therefore, anisotropic etching proceeds, and the processed surface of a material to be etched comes to be a perpendicular wall. In [Step-250], however, the main etching species in the plasma have a small amount of an incidence component having an angle different from perpendicularity, and an oblique incidence component is generated due to scattering on the edge portion of the opening portion 37A. As a result, main etching species enter, at a certain probability, a region in the exposed surface of the electron-emitting layer 33 in which region the ions ought not to reach because the region is masked by the opening portion 37A. Etching species having a smaller incidence angle with regard to the normal of the electron-emitting layer 33 show a higher incidence probability, and main etching species having a larger incidence angle show a lower incidence probability. Therefore, the position of upper end portion of the opening portion 37C formed in the electron-emitting layer 33 is nearly aligned with the lower end portion of the opening portion 37B as shown in Fig. 11A, while the position of the lower end portion of the opening portion 37C comes into a projected state as compared with the upper end portion thereof. That is, the thickness of the electron-emitting layer 33 decreases toward the top end portion of the projection direction, and the end portion is sharpened. In this embodiment, the electron-emitting layer 33 can be excellently processed when $SF_6$ is used as an etching gas.

[Step-260]

Then, the first insulating layer 32 exposed in a bottom of the opening portion 37C is isotropically etched, to form an opening portion 37D as shown in Fig. 11B, whereby the opening portion 37 is completed. In this embodiment, wet etching is carried out with a buffered hydrofluoric acid aqueous solution similarly to the case of the above second insulating layer 34. The opening portion 37D has a side wall positioned backward from the lower end of the opening portion 37C. The amount of the backward distance can be controlled by adjusting the length of the etching time period. In this case, the side wall of the previously formed opening portion 37B is further moved backward. After the completion of the opening portion 37, the resist layer 38 is removed, whereby the edge type field emission device having a structure shown in Fig. 7B can be formed.

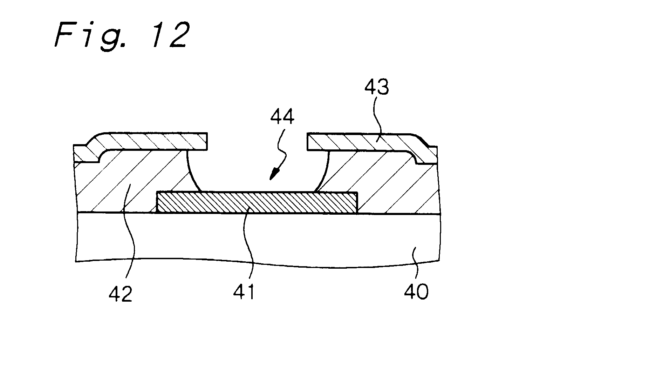

Fig. 12 shows a schematic partial end view of the flat type field emission device. This flat type field emission device comprises:

(a) an electron-emitting layer 41 formed on a support 40,
(b) an insulating layer 42 formed on the electron-emitting layer 41 and the support 40,
(c) a gate electrode 43 formed on the insulating layer 42, and
(d) an opening portion 44 which penetrates through the gate electrode 43 and the insulating layer 42 and has a bottom portion where a surface of the electron-emitting layer 41 is exposed, and

electrons are emitted from the surface of the electron-emitting layer 41 exposed in the bottom portion of the opening portion 44.

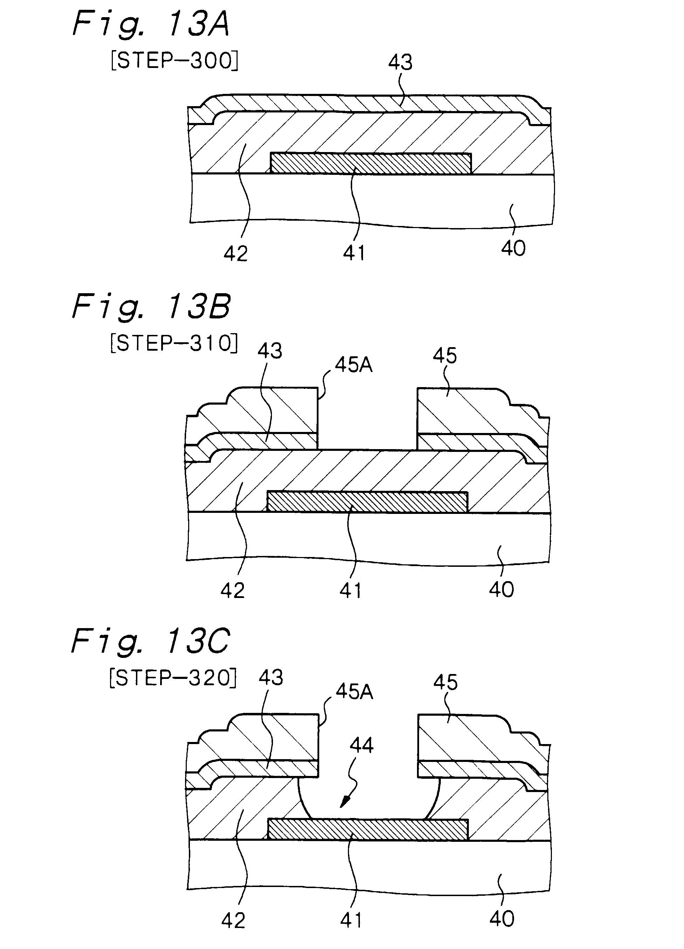

The method of producing the flat type field emission device shown in Fig. 12 will be explained with reference to Figs. 13A, 13B and 13C hereinafter. [Step-300]

First, an approximately 0.2 μm thick electrically conductive material layer composed of tungsten for the electron-emitting layer is formed on a support 40 made, for example, of a glass substrate by a sputtering method. Then, the electrically conductive material layer for the electron-emitting layer is patterned according to general procedures, to form the electron-emitting layer 41. Then, the insulating layer 42 is formed on the electron-emitting layer 41 and the support 40. In this embodiment, for example, an SiO2 layer having a thickness of approximately 1 μm is formed by a CVD method using TEOS (tetraethoxysilane) as a source gas. Further, an electrically conductive material layer for the gate electrode which layer is composed of tungsten and has a thickness, for example, 0.2 μm is formed on the insulating layer 42. Then, electrically conductive material layer is patterned, to form the gate electrode 43. Fig. 13A shows a state in which the process up to the above is finished.

[Step-310]

Then, a resist layer 45 is formed on the entire surface, and further, a resist opening portion 45A is formed in the resist layer 45 such that part of the surface of the gate electrode 43 is exposed. The resist opening portion 45A has, for example, a circular form when viewed as a plan view. Then, the gate electrode 43 exposed in a bottom of the resist opening portion 45A is anisotropically etched, for example, by an RIE method. In this embodiment, since the gate electrode 43 is composed of tungsten, etching with $SF_6$ gas can be carried out. Fig. 13B shows a state in which the procedures up to the above are finished.

[Step-320]

Then, the insulating layer 42 exposed inside the resist opening portion 45A is isotropically etched, to form the opening portion 44 as shown in Fig. 13C. In this embodiment, since the insulating layer 42 is composed of $SiO_2$, wet etching is carried out with a buffered hydrofluoric acid aqueous solution. The insulating layer 42 comes to have a side wall positioned backward from the opening end portion of the gate electrode 43, and the amount of the backward distance can be controlled by adjusting the length of the etching time period. Then, the resist layer 45 is removed, whereby the flat type field emission device shown in Fig. 12 can be produced.

The electron-emitting electrode 15 of the Spindt type field emission device can be composed of a metal such as tungsten (W), niobium (Nb), tantalum (Ta), titanium (Ti), molybdenum (Mo), chromium (Cr), aluminum (Al) or copper (Cu), or an alloy or a compound containing any one of these metals. Of these, it is preferred to use a so-called refractory metal or an alloy or a compound thereof. The electron-emitting electrode 15 can be formed, for example, by a vapor deposition method or a sputtering method.

The electron-emitting layer 33 or 41 of the edge type field emission device or the flat type field emission device can be composed, typically, of tungsten (W), tantalum (Ta), titanium (Ti), molybdenum (Mo), chromium (Cr), an alloy or a compound of any one of these (for example, nitride such as TiN, or a silicide such as $WSi_2$, $MoSi_2$, $TiSi_2$ or $TaSi_2$), a semi-conductive material such as silicon (Si), or diamond. The method of forming the electron-emitting layer 33 or 41 can be selected from general thin-film forming methods such as a vapor deposition method, a sputtering method, a CVD method, an ion plating method, a printing method and a plating method. The thickness of the electron-emitting layer 33 or 41 is in the range of from approximately 0.05 to 0.5 μm, preferably 0.1 to 0.3 μm, although the thickness shall not be limited thereto. The material for the electron-emitting layer 33 may be the same as, or may be different from, the material for the gate electrode 35, the first gate electrode 31 or the second gate electrode 36. Further, the material for the electron-emitting layer 41 may be the same as, or may be different from, the material for the gate electrode 43.

The material for the cathode electrode 11 and the gate electrode 13 of the Spindt type field emission device, the material for the gate electrode 35 or the first gate electrode 31 and the second gate electrode 36 of the edge type field emission device, or the material for the gate electrode 43 of the flat type field emission device can be selected from a metal such as tungsten (W), niobium (Nb), tantalum (Ta), titanium (Ti), molybdenum (Mo), chromium (Cr), aluminum (Al) and copper (Cu), an alloys and compounds containing any one of these metal elements, a semi-conductive material such as silicon (Si), diamond or carbon. These electrodes may be composed of one material, may be composed of materials of the same kind, or may be composed of materials of different kinds. These electrodes can be formed by a generally used thin-film forming process such as a vapor deposition method, a sputtering method, a CVD method, an ion plating method, a printing method or a plating method.

The material for forming the insulating layer 12, the first insulating layer 32, the second insulating layer 34 or the insulating layer 42 can be selected from $SiO_2$, SiN, SiON, a glass paste cured product. These may be used alone or in combination as a stack. The method of forming these layers can be selected from known methods such as a CVD method, an application method, a sputtering method and a printing method.

The support 10, 30 or 40 may be any support so long as it has at least a surface composed of a material having insulation properties. The support includes a glass substrate, a glass substrate having a surface formed of an insulation layer, a quartz substrate, a quartz substrate having a surface formed of an insulation layer, and a semiconductor substrate having a surface formed of an insulation layer.

In the present invention, there may be employed a constitution in which an insulation layer is formed on the entire surface including the gate electrode or the second gate electrode and a focus electrode is formed on the insulation layer. In this case, a second opening portion communicating with the opening portion is formed in the insulation layer. The focus electrode converges the path of electrodes moving toward an anode electrode so that brightness can be improved and that an optical crosstalk among neighboring pixels can be prevented. The focus electrode is particularly effective for a display in which the distance between a cathode panel and an anode panel is relatively large. It is not necessary to form focus electrodes such that one focus electrode corresponds to one field emission device. For example, the focus electrode is disposed along a predetermined arrangement direction of the field emission devices, and a common focusing effect can be therefore produced on a plurality of the field emission devices. The second opening portion formed in the insulation layer is therefore not necessarily required to be formed in the material for the focus electrode. The form of the second opening portion when viewed as a plan view may be congruent with, or similar to, the form of the opening portion when viewed as a plan view, or it may be different from the form of the opening portion when viewed as a plan view.

Example

This Example is related to a process for producing a fluorescence material composition, in which zinc hydroxycarbonate as a precursor of an electrically conductive material, obtained by a liquid phase reaction, is allowed to adhere to a surface of each of sulfide fluorescence material particles and the zinc hydroxycarbonate is sintered (calcined) to convert it to electrically conductive particles of zinc oxide, for producing a fluorescence material composition in which electrically conductive particles composed of zinc oxide adhere to a surface of each of the sulfide fluorescence material particles; a fluorescence material composition obtained by the above process; and a display to which the above fluorescence material composition is applied.

As sulfide fluorescence material particles, there were used particles of six kinds, such as (ZnS: Ag,Cl), (ZnS: Ag,Al), (ZnS:Ag,Al,Cu), (ZnS:Cu,Al), (ZnS:Cu,Au.Al) and ($Y_2O_2S$:Eu). A fluorescence material composition of one of these sulfide fluorescence material particles of six kinds is produced by the same method as that for forming another fluorescence material composition of another of these sulfide fluorescence material particles. Therefore, these sulfide fluorescence material particles of six kinds will be generally referred to as "fluorescence material particles" hereinafter.

First, fluorescence material particles of 5 grams having an average particle diameter of $4 \times 10^{-6}$ m (4 $\mu$m) were dispersed in 50 $cm^3$ of pure water. Into the dispersion of the fluorescence material particles was added a solution of 0.1 to 1.0 gram of zinc acetate [$Zn(CH_3COO)_2$] in 25 $cm^3$ of pure water, and the mixture was stirred. While the mixture was being stirred, a solution of 0.05 to 0.5 gram of sodium carbonate ($NaCO_3$) in 25 $cm^3$ of pure water was dropwise added into the mixture at a rate of 2.5 $cm^3$/minute. In this case, a chemical reaction represented by the following reaction scheme proceeds in an aqueous phase, and zinc hydroxycarbonate [$xZnCO_3 \cdot yZn(OH)_2$] is formed. The most stable zinc hydroxycarbonate has the above formula in which x = 2 and y = 3, and the optimum molar ratio of zinc acetate and sodium carbonate is 5:2, while values of x and y vary to some extent depending upon pH of the aqueous phase. When the molar ratio of these compounds is once determined, a buffer system is formed by a reaction, so that the pH of the aqueous phase is relatively stably maintained. In a lifetime test of fluorescence material compositions, to be described later, the best result was obtained when 0.563 gram ($3.08 \times 10^{-3}$ mol) of zinc acetate and 0.275 gram ($2.6 \times 10^{-3}$ mol) of sodium carbonate were used, and the amount of sodium carbonate was larger than its stoichiometric amount.

$$(x+y)Zn(CH_3COO)_2 + xNa_2CO_3 + 2yH_2O$$

$$\rightarrow xZnCO_3 \cdot yZn(OH)_2 + 2xNa^+ + 2(x+y)CH_3COO^- + 2yH^+$$

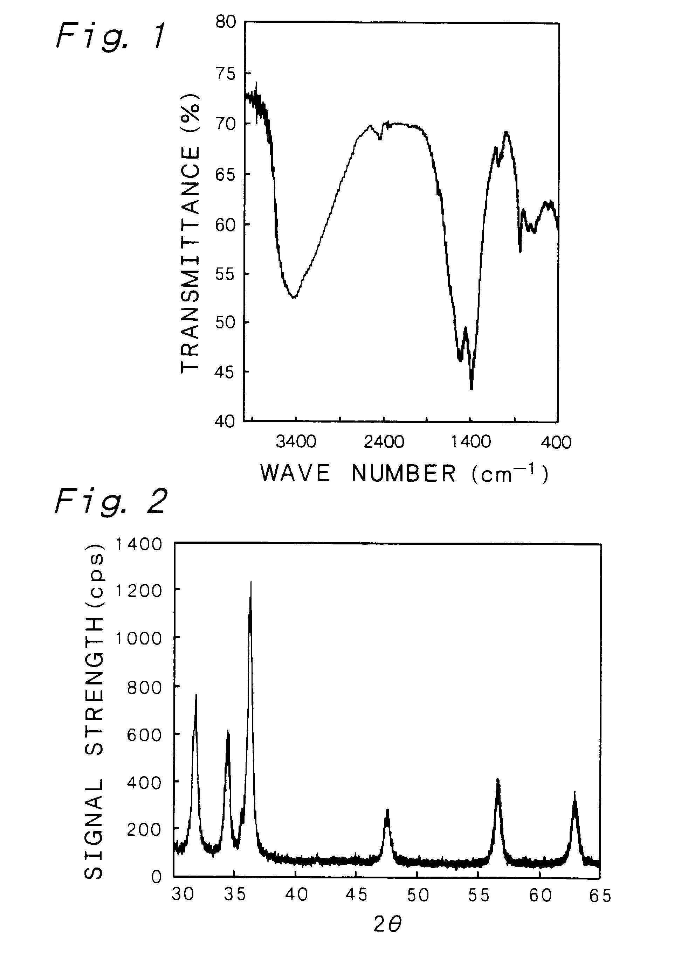

The thus-obtained colloidal reaction mixture was centrifugally separated at 3000 rpm for 30 minutes, to recover a precipitate, and the precipitate was dried at 50°C for 24 hours. Fig. 1 shows a Fourier transform infrared spectroscopic (FT-IR) spectrum of the precipitate. As a typical example, Fig. 1 shows the spectrum of a precipitate obtained when (ZnS: Ag,Cl) particles were used as fluorescence material particles. The spectra of precipitates from the other fluorescence material particles were also similar to the spectrum shown in Fig. 1. Intense absorption around 3400 $cm^{-1}$ is derived from O-H shrinkage vibration, and the absorption is broad, so that a state of association of hydroxyl groups is suggested. Absorption around 1400 $cm^{-1}$ and absorption around 900 $cm^{-1}$ are derived from carbonate ions. It was therefore found that the obtained precipitate contained zinc hydroxycarbonate.

Then, the precipitate was placed in an electric oven and sintered (calcined) in a reducing atmosphere containing carbon at 200 to 500°C for 0.1 to 2.0 hours. When the sintering (calcining) was carried out at 300°C for 0.5 hours, the best result was obtained in a lifetime test of a fluorescence material composition to be described later. When the sintered (calcined) product was analyzed by X-ray diffractometry, a diffraction pattern shown in Fig. 2 was obtained. Fig. 2 shows, as a typical example, a diffraction pattern of a sintered product obtained from (ZnS:Ag,Cl) particles as fluorescence material particles. When the other fluorescence material particles were used, diffraction patterns similar thereto were obtained. The diffraction pattern was compared with an ASTM (JCPDS) card to show the formation of zinc oxide. That is, it was found that zinc hydroxycarbonate as a precursor was sintered to be converted to electrically conductive particles composed of zinc oxide. Further, the sintered product was observed through a scanning electron microscope to show that there was obtained a fluorescence material composition in which electrically conductive particles composed of zinc oxide having a particle diameter of approximately $1.6 \times 10^{-7}$ m (160 nm) nearly uniformly adhered to the surface of each of fluorescence material particles.

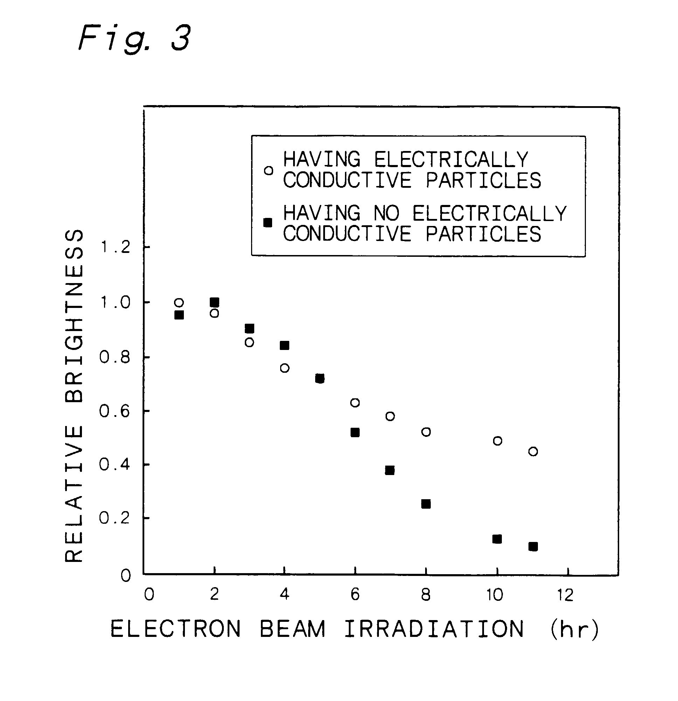

The thus-obtained fluorescence material composition was tested for a lifetime. The fluorescence material composition was packed in a sample holder made of aluminum, the sample holder was set in a brightness measuring apparatus, and the fluorescence material composition was irradiated with electron beams at an electron acceleration voltage of 12 kV at a current density of 0.7 $\mu$A/cm$^2$, to study a relationship between an irradiation time period and a change in brightness. This condition is an accelerated deterioration condition, and severer than an irradiation condition of electron beams in a general field emission display. Fig. 3 shows the results. Fig. 3 shows, as a typical example, a change in brightness of the fluorescence material composition obtained when (ZnS:Ag,Cl) particles were used as fluorescence material particles. Similar changes were also obtained when the other fluorescence material particles were used. In Fig. 3, "relative brightness" of the axis of ordinates shows a relative value when the brightness observed immediately after the irradiation with electron beams was initiated was taken as 1. For comparison, fluorescence material particles subjected to the sintering alone (having no electrically conductive particles) were also measured in the same manner as above, and Fig. 3 shows the results.

In Fig. 3, white spot plots indicate results of the fluorescence material composition of the present invention (having electrically conductive particles), and plots of solid squares indicate results of the comparative fluorescence material particles (having no electrically conductive particles). With an increase in time period of the electron beam irradiation, both the fluorescence material composition of the present invention and the comparative fluorescence material particles show a decrease in brightness (i.e., deterioration). These two products show no much difference in deterioration degree in 6 hours after the irradiation with electron beams is initiated. However, the following has been found. The relative brightness of the comparative fluorescence material particles similarly continues to decrease after 6 hours, whereas the decrease in the relative brightness of the fluorescence material composition of the present invention comes to be moderate, and the fluorescence material composition of the present invention retains the brightness 6 times as high as the brightness of the comparative fluorescence material particles 12 hours after the irradiation is initiated. This is because the adhering of the electrically conductive particles alleviate charging of the fluorescence material particles during the irradiation with electron beams, so that the decomposition of the fluorescence material particles caused by an increase in temperature is suppressed.

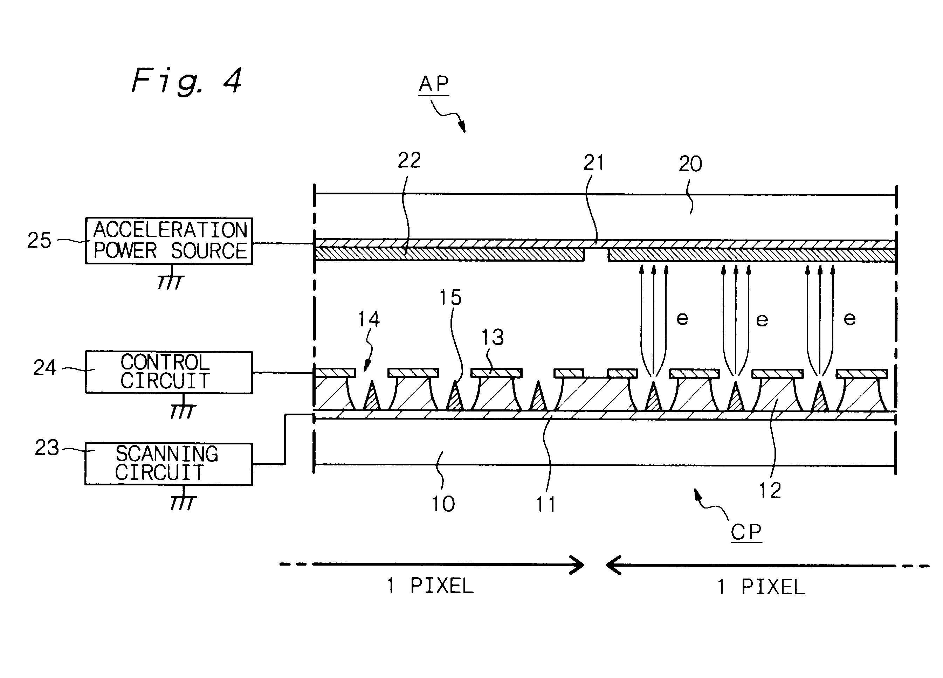

As one example of the display of the present invention, a constitution example of an field emission display using the above fluorescence material composition will be explained with reference to Fig. 4. The display of the present invention has a fluorescence layer formed on a substrate and an exciting source for exciting the fluorescence layer. In a practical constitution thereof, the fluorescence layer 22 is a constituting member of an anode panel AP, and the exciting source is a constituting member of a cathode panel CP, as shown in Fig. 4. In this embodiment, the exciting source is the Spindt type field emission device, and the fluorescence layer 22 is excited by irradiation with electron beams. The exciting source may be the edge type field emission device or the flat type field emission device in place of the Spindt type field emission device.

The anode panel AP comprises a substrate 20 made, for example, of a glass substrate; an anode electrode 21 formed on the substrate 20 and composed, for example, of ITO (indium-tin oxide); and the fluorescence layer 22 formed on the anode electrode 21. The fluorescence layer 22 may be formed to have a pattern in the form of dot matrix or stripes depending upon a displaying method. Further, a space between neighboring fluorescence layers 22 may be filled with a so-called black matrix composed of carbon.

The cathode panel CP comprises a support 10 made, for example, of a glass substrate; a cathode electrode 11 formed on the support 10 and composed, for example, of chromium (Cr); an insulating layer 12 formed on the cathode electrode 11 and the support 10 and composed, for example, of SiO$_2$; a gate electrode 13 formed on the insulating layer 12 and composed, for example, of chromium; an opening portion 14 penetrating through the gate electrode 13 and the insulating layer 12 so as to reach the cathode electrode 11; and a circle-conical electron-emitting electrode 15 formed on the cathode electrode 11 in a bottom portion of the opening portion 14 and composed, for example, of tungsten (W). A portion constituted of the gate electrode 13, one opening portion 14, one electron-emitting electrode 15 and the cathode electrode 11 refers to one electron emitting device, and corresponds to the exciting source of the display of the present invention. The cathode electrodes 11 are formed in a pattern in the form of parallel stripes. The gate electrodes 13 are also formed in a pattern in the form of parallel stripes, while the gate electrodes 13 are aligned at right angles with the direction in which the cathode electrodes 11 are aligned. In an example shown in Fig. 4, in one overlapping region of the cathode electrode 11 and the gate electrode 13, a plurality of the field emission devices are formed, the fluorescence layer 22 is arranged so as to be opposed to this "one" overlapping region, and one pixel is constituted of these field emission devices, the fluorescence layer 22 and the anode electrode 21.

The cathode panel CP and the anode panel AP are bonded to each other in peripheral portions through a frame (not shown), and a space surrounded by these panels and the frame is vacuumed to a high degree. A relatively negative voltage is applied to the electron-emitting electrode 15 from a scanning circuit 23 through the cathode electrode 11, a relatively positive voltage is applied to the gate electrode 13 from a control circuit 24, and a positive voltage higher than the voltage applied to the gate electrode 13 is applied to the anode electrode 21 from an accelerating power source 25. When displaying is performed with the display, video signals are inputted to the control circuit 24, and scanning signals are inputted to the scanning circuit 23. When a voltage is applied between the cathode electrode 11 and the gate electrode 13, an electric field is generated, and electrons e are emitted from the tip portion of the electron-emitting electrode 15 due to the electric field. The emitted electrons e are attracted to the anode electrode 21, collide with the fluorescence layer 22 and excite the fluorescence layer 22 to allow the fluorescence layer 22 to emit light. In other words, the fluorescence layer 22 is excited by irradiation with electron beams to emit light having a characteristic wavelength.

The deterioration of the fluorescence layer 22 caused by the irradiation with electron beams comes to be outstanding particularly when the fluorescence layer 22 is exposed in a vacuum space between the two panels as shown in Fig. 4 and directly receives irradiation with electron beams. In the present invention, however, since the fluorescence layer 22 is formed of the fluorescence material composition of the present invention, the deterioration of brightness is suppressed and a display having a longer lifetime is accomplished. In the constitution of the anode panel AP, the order of stacking the fluorescence layer 22 and the anode electrode 21 is opposite to the constitution order shown Fig. 4 in some cases. That is, in such a constitution, the fluorescence layer is formed on the substrate, and the anode electrode is formed on the fluorescence layer and the substrate. In a so-called high-acceleration-voltage type field emission display, further, a metal-back layer is formed on the anode electrode covering the fluorescence layer in some cases. Even in such cases where the fluorescence layer is covered with the anode electrode or the metal-back layer, the problem of an electrostatic charge on the fluorescence layer 22 in a field emission display driven at a high current has not necessarily been overcome, so that it is highly significant to use the fluorescence material composition of the present invention in order to constitute the fluorescence layer 22.

The present invention has been explained with reference to the preferred embodiments hereinabove, while the present invention shall not be limited thereto. For example, in the above process for producing a fluorescence material composition, the order of adding the zinc acetate aqueous solution and the sodium carbonate aqueous solution may be reversed. That is, the sodium carbonate aqueous solution may be dropwise added into the dispersion of the fluorescence material particles, and then, the zinc acetate aqueous solution may be added to the mixture. The zinc acetate aqueous solution may be replaced with a zinc nitrate aqueous solution or a zinc sulfate aqueous solution. Further, the reaction of the precursor shall not be limited to a liquid phase reaction, and it may be a gaseous phase reaction or a solid phase reaction. Furthermore, electrically conductive particles having a desired composition may be allowed to adhere to a surface of each of the sulfide fluorescence material particles in a gaseous dispersing medium or a liquid dispersing medium without a precursor.

As is clear from the above explanation, since the electrically conductive particles adhere to the surface of each of the sulfide fluorescence material particles, the fluorescence material composition of the present invention not only can provide a variety of emission colors but also has excellent electrical conductivity. In the display having the fluorescence layer formed of the above fluorescence material composition, therefore, a decrease in the brightness is effectively suppressed even when the device is driven at a high current density, and a longer lifetime of the device is accomplished. The present invention produces remarkable effects particularly when it is applied to a so-called low-acceleration-voltage type field emission display which is driven at a low voltage and at a high current density. According to the process for producing a fluorescence material composition, provided by the present invention, the electrically conductive particles can be allowed to uniformly adhere to the surface of each of the sulfide fluorescence material particles, and the fluorescence material composition of the present invention can be easily provided.

**Claims**

1. A fluorescence material composition consisting of sulfide fluorescence material particles and electrically conductive particles adhering to a surface of each of the sulfide fluorescence material particles.

2. The fluorescence material composition according to claim 1, wherein the electrically conductive particles have a diameter smaller than a diameter of the sulfide fluorescence material particles.

3. The fluorescence material composition according to claim 1, wherein the electrically conductive particles are composed of zinc oxide.

4. A process for producing a fluorescence material composition, said process comprising the steps of:

   (A) allowing a precursor of an electrically conductive material to adhere to a surface of each of sulfide fluorescence material particles in a dispersing medium in which the sulfide fluorescence material particles are dispersed, and

(B) converting the precursor of the electrically conductive material to electrically conductive particles to obtain a fluorescence material composition consisting of the sulfide fluorescence material particles and the electrically conductive particles adhering to a surface of each of the sulfide fluorescence material particles.

5. The process for producing a fluorescence material composition according to claim 4, wherein the electrically conductive particles have a diameter smaller than a diameter of the sulfide fluorescence material particles.

6. The process for producing a fluorescence material composition according to claim 4, wherein, in the step (A), the precursor of the electrically conductive material obtained by a liquid phase reaction in the dispersing medium is allowed to adhere to the surface of each of the sulfide fluorescence material particles.

7. The process for producing a fluorescence material composition according to claim 6, wherein, in the step (A), water is used as a dispersing medium, and the precursor which is a zinc salt containing oxygen atom is allowed to adhere to the surface of each of the sulfide fluorescence material particles, and
in the step (B), the zinc salt containing oxygen atom is sintered to convert it to the electric conductive particles composed of zinc oxide.

8. The process for producing a fluorescence material composition according to claim 7, wherein the zinc salt containing oxygen atom is zinc hydroxycarbonate.

9. A display for performing displaying with light emission of a fluorescence layer (22) caused by excitation, said display comprising:

the fluorescence layer (22) formed on a substrate (20), and
an exciting source (CP) for exciting the fluorescence layer,
wherein the fluorescence layer (22) comprises a fluorescence material composition consisting of sulfide fluorescence material particles and electrically conductive particles adhering to a surface of each of the sulfide fluorescence material particles.

10. The display according to claim 9, wherein the fluorescence layer is excited by irradiation with electron beams generated by the exciting source.

11. The display according to claim 10, wherein the exciting source is a cold cathode field electron emission device.

*Fig. 1*

*Fig. 2*

Fig. 3

*Fig. 4*

AP

22    21    20

25 — ACCELERATION POWER SOURCE

e    e    e

14    15    13

24 — CONTROL CIRCUIT

23 — SCANNING CIRCUIT

10    11    CP    12

1 PIXEL    1 PIXEL

EP 1 078 969 A1

## Fig. 5A
[STEP–100]

## Fig. 5B
[STEP–110]

## Fig. 6A
[STEP-120]

15A

16

13

12

11

10

15

## Fig. 6B
[STEP-130]

13A   14

15

13

12

11

10

Fig. 7A

Fig. 7B

## Fig. 8

EP 1 078 969 A1

*Fig. 9A*

[STEP−200]

31             31

30

*Fig. 9B*

[STEP−210]

33

32

30

31             31

*Fig. 9C*

[STEP−220]

36             36

34

32

30

31      33      31

## Fig. 10A

[STEP-230]

## Fig. 10B

[STEP-240]

# Fig. 11A

[STEP-250]

# Fig. 11B

[STEP-260]

*Fig. 12*

*Fig. 13A*

[STEP−300]

43

42  41  40

*Fig. 13B*

[STEP−310]  43  45A  45

42  41  40

*Fig. 13C*

[STEP−320]  43  45A  45

44

42  41  40

EP 1 078 969 A1

## DOCUMENTS CONSIDERED TO BE RELEVANT

**European Patent Office**

**EUROPEAN SEARCH REPORT**

Application Number

EP 00 40 2308

| Category | Citation of document with indication, where appropriate, of relevant passages | Relevant to claim | CLASSIFICATION OF THE APPLICATION (Int.Cl.7) |
|---|---|---|---|
| X | EP 0 353 653 A (KASEI OPTONIX) 7 February 1990 (1990-02-07) * the whole document * | 1,3,4,6, 8-10 | C09K11/02 H01J17/49 C09K11/56 |
| X | US 5 032 316 A (TAKAHASHI FUMIO ET AL) 16 July 1991 (1991-07-16) * the whole document * | 1,3,4,6, 8-10 | |
| X | US 4 680 231 A (YAMAURA TATSUO ET AL) 14 July 1987 (1987-07-14) * the whole document * | 1-3,9,10 | |
| X | PATENT ABSTRACTS OF JAPAN vol. 014, no. 118 (C-0697), 6 March 1990 (1990-03-06) & JP 01 318078 A (NICHIA CHEM IND LTD), 22 December 1989 (1989-12-22) * abstract * | 1,2,4-6 | |
| A | EP 0 466 053 A (KASEI OPTONIX) 15 January 1992 (1992-01-15) * the whole document * | 1,3,4,6, 9,10 | TECHNICAL FIELDS SEARCHED (Int.Cl.7) C09K H01J |
| A | US 5 055 227 A (YONESHIMA KUNIHIKO ET AL) 8 October 1991 (1991-10-08) * the whole document * | 1,3,4,6, 9,10 | |

The present search report has been drawn up for all claims

| Place of search | Date of completion of the search | Examiner |
|---|---|---|
| THE HAGUE | 14 November 2000 | Drouot-Onillon, M-C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

26

**ANNEX TO THE EUROPEAN SEARCH REPORT
ON EUROPEAN PATENT APPLICATION NO.**                EP 00 40 2308

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2000

| Patent document cited in search report | | Publication date | Patent family member(s) | | Publication date |
|---|---|---|---|---|---|
| EP 0353653 | A | 07-02-1990 | JP 2041389 A<br>JP 2525649 B<br>DE 68912674 D<br>DE 68912674 T<br>KR 133534 B<br>US 5006277 A | | 09-02-1990<br>21-08-1996<br>10-03-1994<br>01-09-1994<br>20-04-1998<br>09-04-1991 |
| US 5032316 | A | 16-07-1991 | JP 1104684 A<br>JP 2090393 C<br>JP 7110941 B<br>KR 9600868 B | | 21-04-1989<br>18-09-1996<br>29-11-1995<br>13-01-1996 |
| US 4680231 | A | 14-07-1987 | JP 61127783 A<br>JP 62033266 B<br>KR 9304585 B | | 16-06-1986<br>20-07-1987<br>01-06-1993 |
| JP 01318078 | A | 22-12-1989 | JP 2532586 B | | 11-09-1996 |
| EP 0466053 | A | 15-01-1992 | JP 3007893 B<br>JP 4068078 A<br>DE 69102501 D<br>DE 69102501 T<br>KR 161986 B<br>US 5132044 A | | 07-02-2000<br>03-03-1992<br>21-07-1994<br>26-01-1995<br>15-01-1999<br>21-07-1992 |
| US 5055227 | A | 08-10-1991 | JP 2302490 A<br>JP 2811083 B | | 14-12-1990<br>15-10-1998 |

EPO FORM P0459

For more details about this annex : see Official Journal of the European Patent Office, No. 12/82